# EUROPEAN PATENT SPECIFICATION

(11) **EP 0 709 947 B1**
(45) Date of publication and mention of the grant of the patent: **08.07.1998**
(21) Application number: 95112691.1
(22) Date of filing: 11.08.1995
(51) Int. Cl.: H02K 21/22, H02K 21/28, H02K 1/08

(54) **Balancing of radial reluctance forces in a DC motor**
Ausgleich von medialen Reluktanzkräften in einem Gleichstrommotor
Equilibrage de forces radiaux à réluctance dans un moteur à courant continu

(30) Priority: 28.10.1994 US 330632
(43) Date of publication of application: 01.05.1996
(73) Proprietor: Hewlett-Packard Company, Palo Alto, California 94304 (US)
(72) Inventor: McAllister, Jeffrey S., Boise, Idaho 83715 (US)
(74) Representative: Baillie, Iain Cameron

(56) References cited:
- EP-A- 0 169 569
- EP-A- 0 182 702
- EP-A- 0 543 625
- FR-A- 2 392 525

## Description

### FIELD OF THE INVENTION

This invention relates generally to direct current motors and in particular to DC motors which comprise a permanent magnet stator or rotor.

### BACKGROUND OF THE INVENTION

Disk drives presently employ brushless, permanent magnet, direct current motors as the disk spindle motors for rotating the memory disk assembly at a selected constant speed. These motors comprise a permanent magnet rotor having a predetermined number of poles and a salient pole stator having a predetermined different number of stator poles. Each stator pole has a winding mounted thereon, the windings being connected in delta or star configuration.

The salient stator poles are radially disposed and have pole tips, the pole faces of which define a radial gap with a cylindrical surface of the permanent magnet rotor. In practice, the stator is within the rotor. The spaces between the radially disposed salient poles are referred to as slots. One common type of disk spindle motor being referred to herein as an 8 pole 9 slot disk spindle motor.

The 8 pole 9 slot disk spindle motor is a common configuration for spindle motors because of the low reluctance (cogging) torque which can reduce pure tone acoustic noise in cases where that torque excites structural resonances. One of the disadvantageous of this configuration, however, is that the internal magnetic forces between the rotor and the stator are not radially balanced. The reluctance forces between the permanent magnet poles and the stator teeth or poles have a resultant force even in the nominal case. The commutation forces also result in a resultant radial force because the typical winding pattern has each phase made up of three consecutive salient stator poles.

These radial forces in the 8 pole 9 slot motor cause distortion of the structure at the 8th harmonic of the rotation frequency. The effect can be particularly bad when the frequency of this force causes structural resonance. The relative magnitude of the radial reluctance force vs. the commutation force, seems to vary depending upon the size of the motor. In the disk spindle motors in the 3.5 inch form factor disk drives, the commutation force seems to be a significant factor, whereas in the smaller disk spindle motors employed in the 1.3 inch form factor disk drives, for example, the reluctance force dominates.

U.S. Patent 4,280,072 to Gotou et al discusses tooth or pole tip shaping for reducing cogging torque but evidences no awareness of problems associated with unbalanced radial reluctance forces.

In motors intended for disk drive applications, there is a need for balancing of the radial reluctance forces.

### SUMMARY OF THE INVENTION

This invention is directed to a permanent magnet type of salient pole direct current motor in which the net radial force between the rotor and the stator is reduced by balancing the radial reluctance forces therebetween. Radial reluctance force balancing is achieved by slotting the pole faces of the pole tips of the salient poles of the motor.

A permanent magnet direct current motor has a first motor part comprising radially dispose salient poles, the ends of which comprise arcuate pole faces which confront the cylindrical surface of a second motor part comprising equally circumferentially spaced, alternately radially poled, permanent magnet sectors assembled in a ring. The ring is preferably an integral ring. The radially disposed salient poles, the first motor part, may comprise either the stator or the rotor of the motor and the permanent magnet sectors, the second motor part, may comprise either the rotor or the stator. In the disk spindle motors in disk drives, the radially disposed salient poles comprise the motor stator and the permanent magnet sectors are assembled in a ring radially spaced from the tips or pole faces of the salient poles and mounted for rotation concentric with the salient pole stator.

To reduce the net radial force between the rotor and the stator the pole face of the pole tip of each salient pole, is notched or slotted in an axial direction across the pole face. The radial depth and circumferential width of the slot are such as to magnetically characterize the slot between the salient poles, so that the number of poles sensed or coupled by the permanent magnet rotor, in effect, is doubled, to produce an apparent number of salient poles and number of permanent magnet poles divisible by a common integer. Using the example of the 8 pole 9 slot motor referenced above, for which there is no common divisor, slotting of the pole faces of the salient poles results in an 8 pole, apparent 18 slot motor, for which the common integer divisor is 2. This results in balanced radial reluctance forces.

According to the present invention, there is provided a direct current motor in which the radial reluctance is balanced, the motor including a cylindrical permanent magnet rotor having a plurality of rotor poles defined by radially magnetized, alternately poled, circumferential sectors defining a cylindrical surface; a salient pole stator having a different plurality of radially disposed salient poles defining stator slots therebetween ; a pole tip mounted to each salient pole; and a pole face on each pole tip radially spaced from said cylindrical surface and defining a radial gap therewith, each pole face having a pole face slot therein extending axially of said pole face, the motor characterized in that:
a. there being no common integer divisor greater than one for the number representing said plurality of rotor poles and the number representing said stator slots; and
b. the number representing the sum of said stator slots and pole face slots and the number representing said plurality of rotor poles each being divisible by the same integer greater than one.

### DESCRIPTION OF THE DRAWINGS

The invention will be better understood by reference to the following specification when considered in conjunction with the accompanying drawings, in which:
Fig. 1 illustrates a prior art 8 pole 9 slot permanent magnet, brushless direct current motor.
Fig. 2 illustrates a slotted pole, 8 pole 9 slot direct current motor, according to this invention, and
Fig. 3 is an ideal plot of the radial forces on each magnetic pole of an 8 pole, 9 slot direct current motor, with slotted salient pole faces, showing a net radial force of 0.
Fig. 4 is an ideal plot of the X axis component of the radial forces shown in Fig. 3.

### DETAILED DESCRIPTION OF THE PREFERRED EMBODIMENTS

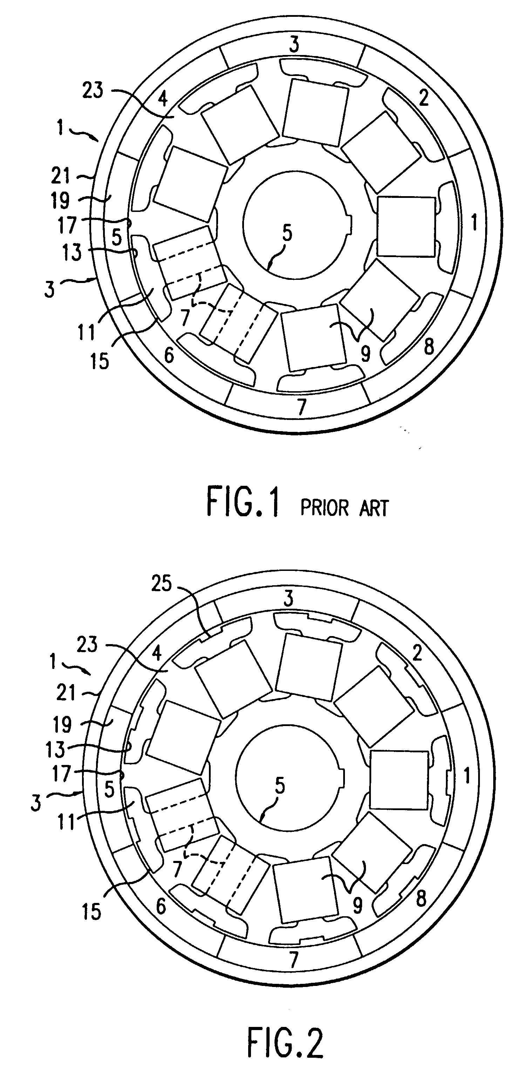

Fig. 1 illustrates a brushless direct current motor 1 having a permanent magnet rotor 3 and a salient pole stator 5. In this illustration there are 8 permanent magnet rotor poles and 9 salient stator poles. Each salient pole 7 of the salient pole stator 5 mounts a winding 9. Groups of three consecutive windings 9, in a circumferential direction, are connected in series and the groups of windings are conventionally connected in star or delta configuration, as is well known.

For the purpose of this disclosure, the salient pole stator 5 is disposed within the permanent magnet rotor 3, however, the stator and rotor roles may be reversed. Similarly, the permanent magnet rotor 3 may be disposed within a salient pole stator 5 and may, alternatively, function as a permanent magnet stator within a salient pole rotor.

The radially disposed salient poles 7 each terminate in a pole tip 11 having an arcuate pole face 13 defining a radial gap 15 with the inner cylindrical surface 17 of a permanent magnet ring 19 which is mounted within the body 21 of the rotor 3. The rotor body 21 is of a magnetic material and functions as a return path for each of the permanent magnet poles in the rotor. The permanent magnet ring 19 is radially spot magnetized in alternately poled, equal circumferential sectors, which are magnetically coupled to the pole tips 11 across the radial gaps 15 at the pole tip end faces 13 of the salient pole stator. As can be seen from an inspection of Fig. 1, there is no diametrical symmetry between the rotor and the stator. Each of the permanent magnet poles will be attracted to adjacent pole tips. In this configuration, there is a resultant radial reluctance force that rotates at the 8th harmonic when the motor is rotating.

The space 23 between the pole tips 11, of the salient pole stator 5, is defined herein as a stator slot. Hence, the motor is referred to herein as an 8 pole 9 slot motor.

Fig. 2 shows the purposed configuration of this same 8 pole 9 slot motor with pole face slots 25 cut in an axial direction in each pole face 13. These pole face slots 25 should look like the stator slots 23 in the permanent magnet circuit and therefore, in the ideal case, should balance the radial reluctance forces, resulting in no net radial force between the rotor and the stator. The implementation of the pole face slots 25 results in an increase in the reluctance torque which is not of significance.

The pole face slots 25 are designed in cross sectional configuration and length to look like the stator slots 23 in the magnetic circuit. Typically, the width of the pole face slot 25, measured circumferentially, is substantially the same as the circumferential dimension between the adjacent edges of the pole tips 11. The depth of the pole face slot 25 is substantially the same as the dimension of the radial gap 15 to make it look like an infinite gap, but may be cut deeper, the depth of the pole face slot 25 beyond the dimension of the radial gap 15 has not been found to be critical. The pole face slots 25 do not significantly reduce motor commutation torque.

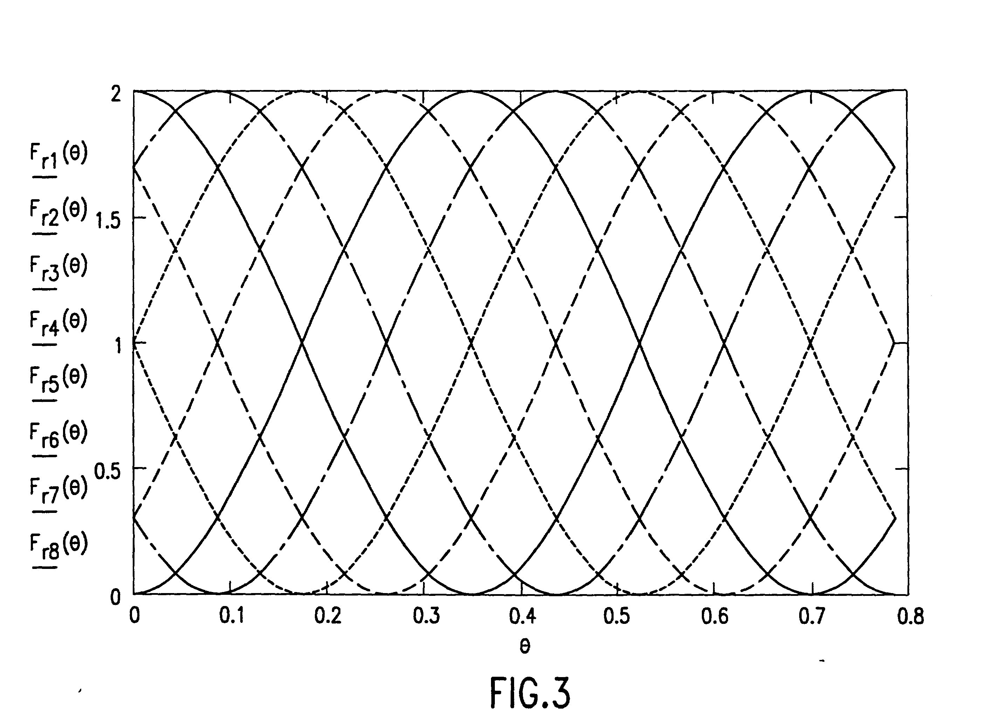

As seen in Fig. 3, which ideally plots the radial force on each pole, poles 1-8, of an 8 pole 9 slot motor with pole face slots (18 slot), each of the magnetic poles will see the same oscillating force, but out of phase by one magnetic pole angle.

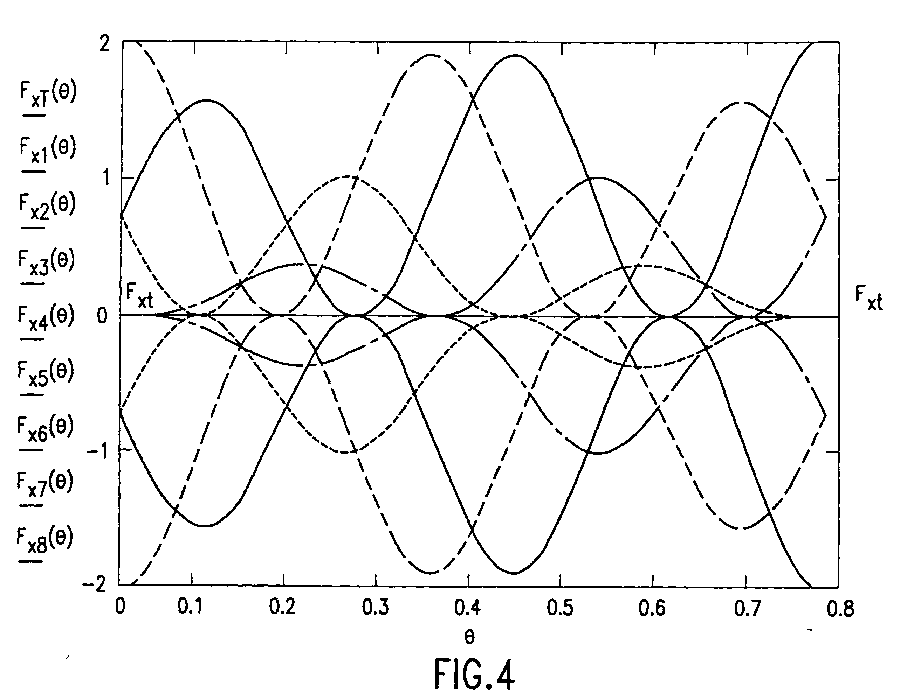

As seen in Fig. 4, which ideally plots the pole and resultant x-axis forces, for the same motor, the sum of the x-axis forces is equal to zero, F_{xT}(⊖) = 0 .

Direct current motors such as the 8 pole 9 slot motor described herein have very little reluctance torque and are ideally suited to applications such as the disk spindle motors in disk drives. The unbalanced radial reluctance forces in such motors, however, can induce harmonic excitation in the drive which may be unacceptable. The benefit of this invention is that by providing the pole face slots 25 in the pole tips 11, the radial reluctance forces in the motor are balanced. Thus, for all practical purposes, harmonic excitation in the drive due to unbalanced radial reluctance forces is eliminated.

## Claims

1. A direct current motor (1) in which the radial reluctance is balanced, the motor including a cylindrical permanent magnet rotor (3) having a plurality of rotor poles defined by radially magnetized, alternately poled, circumferential sectors defining a cylindrical surface; a salient pole stator (5) having a different plurality of radially disposed salient poles (7) defining stator slots therebetween (23); a pole tip (11) mounted to each salient pole; and a pole face on each pole tip radially spaced from said cylindrical surface and defining a radial gap (15) therewith, each pole face (13) having a pole face slot (25) therein extending axially of said pole face, the motor characterized in that:
a. there being no common integer divisor greater than one for the number representing said plurality of rotor poles and the number representing said stator slots; and
b. the number representing the sum of said stator slots and pole face slots and the number representing said plurality of rotor poles each being divisible by the same integer greater than one.

2. The direct current motor according to claim 1, in which:
a. the circumferential width of each pole face slot (25) is substantially equal to the circumferential dimension between adjacent edges of said pole tips (11), and
b. the depth of said pole face slot (25) is substantially equal to the radial dimension of said radial gap (15).

3. The direct current motor according to claim 2, in which said depth of said pole face slot (25) is greater than the radial dimension of said radial gap (15).

4. The direct current motor according to claim 1, in which said pole face slot (25) extends axially of said pole tip (11) from one pole tip side to the other.

## Patentansprüche

1. Ein Gleichstrommotor (1), bei dem die radiale Reluktanz ausgeglichen ist, wobei der Motor folgende Merkmale aufweist: einen zylindrischen Permanentmagnet-Rotor (3) mit einer Mehrzahl von Rotorpolen, die durch radial magnetisierte, abwechselnd gepolte, umfangsmäßige Sektoren, die eine zylindrische Oberfläche definieren, definiert sind; einen Schenkelpolstator (5) mit einer unterschiedlichen Mehrzahl von radial angeordneten Schenkelpolen (7), die Statorschlitze (23) zwischen denselben definieren; eine Polspitze (11), die auf jedem Schenkelpol angebracht ist; und eine Polfläche auf jeder Polspitze, die radial von der zylindrischen Oberfläche beabstandet ist und einen radialen Zwischenraum (15) mit derselben definiert, wobei jede Polfläche (13) einen Polflächenschlitz (25) in derselben aufweist, der sich axial zu der Polfläche erstreckt, wobei der Motor dadurch gekennzeichnet ist, daß
a. kein gemeinsamer ganzzahliger Divisor größer als Eins für die Zahl, die die Mehrzahl von Rotorpolen darstellt, und die Zahl, die die Statorschlitze darstellt, existiert; und
b. die Zahl, die die Summe der Statorschlitze und der Polflächenschlitze darstellt, und die Zahl, die die Mehrzahl von Rotorpolen darstellt, jeweils durch die gleiche ganze Zahl größer als Eins teilbar sind.

2. Der Gleichstrommotor gemäß Anspruch 1, bei dem
a. die umfangsmäßige Breite jedes Polflächenschlitzes (25) im wesentlichen gleich der umfangsmäßigen Abmessung zwischen benachbarten Kanten der Polspitzen (11) ist, und
b. die Tiefe der Polflächenschlitze (25) im wesentlichen gleich der radialen Abmessung des radialen Zwischenraums (15) ist.

3. Der Gleichstrommotor gemäß Anspruch 2, bei dem die Tiefe des Polflächenschlitzes (25) größer ist als die radiale Abmessung des radialen Zwischenraums (15).

4. Der Gleichstrommotor gemäß Anspruch 1, bei dem sich der Polflächenschlitz (25) axial zu der Polspitze (11) von einer Polspitzenseite zu der anderen erstreckt.

## Revendications

1. Moteur à courant continu (1) où la réluctance radiale est équilibrée, le moteur comprenant un rotor (3) à aimants permanents cylindriques ayant une pluralité de pôles de rotor définis en ce qu'ils sont constitués de secteurs circonférentiels, magnétisés radialement, à polarité alternée définissant une surface cylindrique ; un stator (5) à pôles saillants, ayant un nombre différent de pôles (7) saillants disposés radialement définissant des intervalles de stator entre eux (23) ; une corne polaire (11) est montée sur chaque pôle saillant ; et une face polaire sur chaque corne polaire est espacée radialement de ladite surface cylindrique et définit un entrefer radial (15) entre eux, chaque face polaire (13) ayant une rainure de face polaire (25) qui s'étend dans cette face axialement depuis la face polaire, le moteur est caractérisé en ce que :
a. il n'existe pas de diviseur commun entier supérieur à 1 pour le nombre représentant ladite pluralité de pôles de rotor et le nombre représentant lesdits intervalles de stator ; et
b. le nombre représentant la somme desdits intervalles de stator et des rainures de face polaire et le nombre représentant ladite pluralité des pôles de rotor sont tous les deux divisibles par le même nombre entier supérieur à 1.

2. Moteur à courant continu selon la revendication 1, où
a. la largeur circonférentielle de chaque rainure (25) de face polaire est sensiblement égale à la dimension circonférentielle comprise entre les bords adjacents desdites cornes polaires (11), et
b. la profondeur de ladite rainure de face polaire (25) est sensiblement égale à la dimension radiale dudit entrefer radial (15).

3. Moteur à courant continu selon la revendication 2, où ladite profondeur de ladite rainure de face polaire (25) est supérieure à la dimension radiale dudit entrefer radial (15).

4. Moteur à courant continu selon la revendication 1, où ladite rainure de face polaire (25) s'étend axialement par rapport à la corne polaire (11) d'un côté de la corne polaire jusqu'à l'autre côté.
